# EUROPEAN PATENT SPECIFICATION

(11) **EP 1 950 384 B1**
(45) Date of publication and mention of the grant of the patent: **19.03.2014**
(21) Application number: 05806844.6
(22) Date of filing: 15.11.2005
(51) Int. Cl.: F01L 3/02, F16K 1/36, F16K 25/00, F01L 3/14

(54) **COOLANT-CONTAINING HOLLOW POPPET VALVE AND PROCESS FOR PRODUCING THE SAME**
KÜHLMITTEL ENTHALTENDES HOHLES TELLERVENTIL UND HERSTELLUNGSVERFAHREN DAFÜR
SOUPAPE CHAMPIGNON CREUSE CONTENANT UN FLUIDE DE REFROIDISSEMENT ET SON PROCEDE DE PRODUCTION

(43) Date of publication of application: 30.07.2008
(73) Proprietor: Nittan Valve Co., Ltd., Hadano-shi, Kanagawa 257-0031 (JP)
(72) Inventor: UCHIYAMA, Takehiko, Kanagawa 2570031 (JP); MURAYAMA, Takemi, Kanagawa 2570031 (JP); ANDO, Teruaki, Kanagawa 2570031 (JP)
(74) Representative: Klingseisen, Franz
(86) International application number: PCT/JP2005/020975
(87) International publication number: WO 2007/057946

(56) References cited:
- EP-A1- 1 152 127
- EP-A2- 0 911 493
- JP-A- 1 083 676
- JP-A- 8 176 752
- JP-A- 11 032 525
- JP-A- 2001 323 323

## Description

### FIELD OF THE INVNETION

This invention relates to a hollow poppet valve charged with a coolant and having sufficient heat resistance, wear resistance, and strength in accord with required use conditions of the valve, and to a method of manufacturing such hollow poppet valve. More particularly, the invention relates to a hollow poppet valve having a cap that is integrally welded to the fillet portion that is integrally formed at one end of the cylindrical stem portion of the poppet valve, and to a method of manufacturing such hollow poppet valve.

### BACKGROUND OF THE INVENTION

A typical prior art poppet is disclosed in the patent document cited below. As shown in Fig. 8, this prior art hollow poppet valve has a thick edge (hereinafter referred to as thick portion) at the upper open end of the fillet region provided at the upper end of a cylindrical stem portion (G region) of the hollow poppet valve. A cap welding portion A is provided on the inside of the thick part and away from the seat portion 150 (of E region). It is anticipated that the seat portion 150 retains a higher Vickers hardness in the range from 300 to 349HV than regions A, B, C, and D, whose Vickers hardnesses are lowered by welding heat. Thus, the seat portion 150 is anticipated to have sufficient wear resistance against repeated abutment with a cylinder to maintain the seat portion 150 in intimate contact with the cylinder during closing/opening operation of the valve.

As discussed above, the prior art valve has been regarded capable of retaining sufficient fatigue strength and creep strength when the seat portion 150 and other portions of the valve including the fillet region 140 (region F) are hardened as high as possible (in the range from 350 to 399 HV). CITED PATENT DOCUMENT 1: International Publication W0 00/No. 47876.

EP 1 152 127 A1 describes a hollow poppet valve without coolant. This teaching intends to prevent the face portion from becoming harder and the welded portion from being raptured by thickening the face portion (or regulating welding position) of the valve.

EP 0 911 493 A2 intends to enhance the strength of the tip of an ultra-light hollow valve by securely providing the tip with particular members.

### DISCLOSURE OF INVENTION

### PROBLEMS TO BE SOLVED BY THE INVENTION

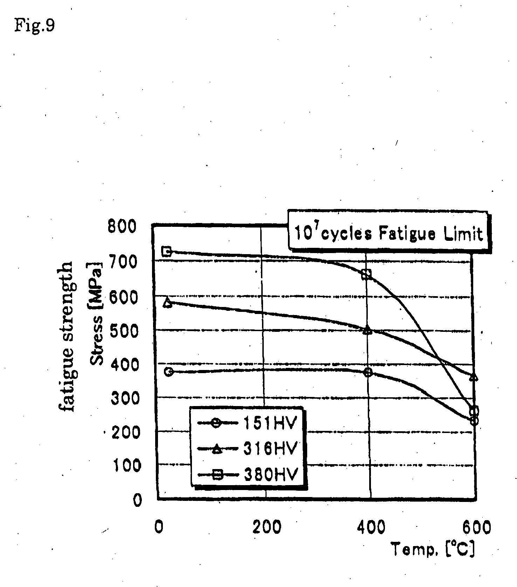

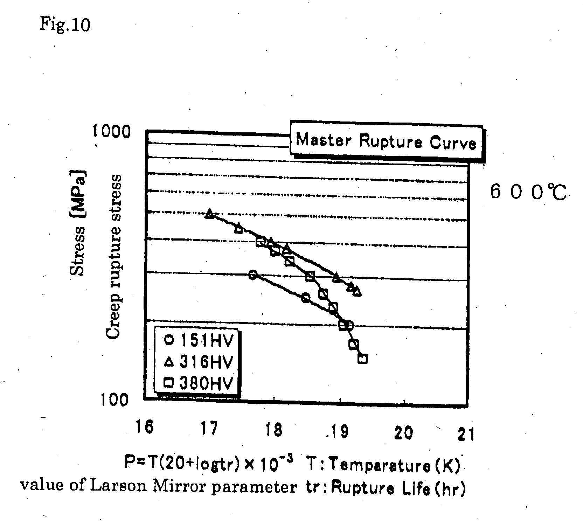

However, it has been found from the measurements of strengths of actual hollow poppet valves conducted by the inventors of the present invention that those portions of the poppet valves exposed to high temperatures, e. g. fillet region 140, are liable to deterioration in fatigue strength and creep strength, and loose their initial strengths given by hardening, as shown in Fig. 9 and 10.

Fig. 9 shows measured fatigue strengths (ordinate) of cold-worked austenitic-stainless-steel materials for hollow poppet valves after they were hardened to three different levels of hardness (151, 316, and 380 HV in Vickers hardness) and subjected to 10 million times of fatigue tests under different temperatures (abscissa). Fig. 10 shows creep strengths (ordinate) of the same materials as shown in Fig. 9, which were also cold-worked to three different levels of hardness and tested at 600 °C. The abscissa represents value of Larson Mirror parameter.

It is seen in Fig. 9 that the larger the hardness of a valve material is, the higher its fatigue strength, and that the fatigue strength decreases with a relatively moderate rate in the temperature range between the room temperature (25 °C) and 400 °C irrespective of the hardness of the sample. Above 400 °C, however, the fatigue strength of the material hardened to 380 HV decreases with an extremely large rate as compared with other materials hardened to 151 HV and 316 HV.

That is, fatigue strength of the material having hardness of 380 HV quickly decreases when used at or above 400 °C, and, when used at 600 °C, decreases to a level comparable to that of the material having hardness of 151 HV, which level is far below the fatigue strength of the material having hardness of 316 HV.

On the other hand, it is seen in Fig. 9 that if the valve material hardened to 380 HV is used at 600 °C, it looses creep strength greatly in time as compared with the materials hardened to 151 and 316 HV. A reason for this great loss in fatigue and creep strengths of the material which was initially hardened to 380 HV and used at 600 C° may be due to recrystallization of the texture of the material caused by hardening to 380 HV.

Thus, in the event that the valve is excessively hardened and the seat portion 150 undergoes repetitive abutment against the seat metal of a cylinder during its closing/opening operations at a temperature above 500 °C, the cold-worked head portion, i. e. the fillet region 14, of the valve is subjected to repetitive strong tensile stresses and fails to retain required fat igue strength and creep strength, thereby resulting in problematic ruptures for example.

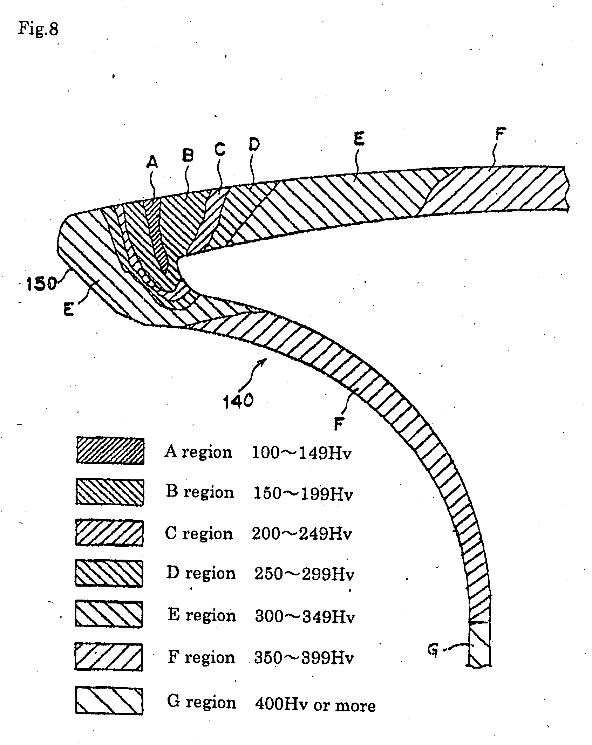

On the other hand, the stem portion of the poppet valve or the cylindrical shaft portion that corresponds to region G extending downward from the lower end of the head portion as shown in Fig. 8, is in sliding contact with the valve guide section of the cylinder and repeatedly subjected to tensile stresses in the same manner as the head portion. As a consequence, if it is cold worked to the same hardness as the head portion, it suffers the same problem that it cannot retain necessary fatigue strength and wear resistance.

Further, the seat portion 15 that comes into contact with the seat metal of a cylinder needs to be cold worked harder than the head portion in order to allow the seat portion to come into intimate contact with the cylinder as much as possible, otherwise it cannot sustain wear resistance necessary to secure the intimate contact.

In view of the prior art problems discussed above, this invention seeks to provide a cold-worked, heat-treated hollow poppet valve charged with a coolant, and a method of manufacturing such poppet valve, such that the valve has a fillet region (or head portion) having sufficient fatigue strength and creep strength to stand repetitive use at high temperatures.

The invention further seeks to provide a hollow poppet valve charged with coolant and having a stem portion (or shaft portion) having predetermined fatigue strength and wear resistance and a seat portion having predetermined wear resistance. The invention also seeks to provide a method of manufacturing such hollow poppet valve.

### MEANS FOR SOLVING THE PROBLEMS

To this end, there is provided a hollow poppet valve charged with a coolant as claimed in claim 1, having different portions of different hardness which are formed by steps of:
cold pressing a material into a cup-shaped object having a thick edge at the open end of the cup-shaped object;
intermediate annealing to soften the cup-shaped object;
cold drawing to form a head portion having a flared opening at the open end of the cup-shaped object,a cylindrical hollow shaft portion integral with the head portion, and
a tapered seat portion around the outer periphery of the thick edge, whereby the head portion is hardened to Vickers hardness in the range from about 250 HV to 350 HV inclusive.

### Working

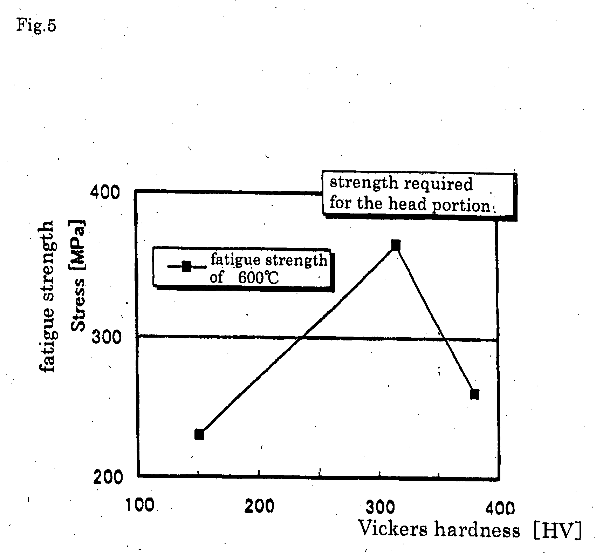

Since the hardness of head portion is maintained between about 250 HV and 350 HV inclusive, the head portion does not undergo a recrystallization that would otherwise take place when the head portion is hardened to 380HV for example and used at a high temperature. Accordingly, significant decline of fatigue strength and creep strength of the head portion as indicated by 380 HV curve in Fig. 9 and 10 will not take place if the valve is used repeatedly at high temperatures, and will maintain necessary fatigue strength and creep strength, as shown in Fig. 5.

The stem portion of the hollow poppet valve charged with a coolant as defined in claim 1 may be hardened to Vickers hardness of about 350 HV or more, as defined in claim 2.

### Working

By hardening the shaft portion to about 350 HV or more in view of the fact that this portion is comparatively less exposed to high temperatures than the head portion, good fatigue strength and wear resistance of the shaft portion can be maintained while undergoing repetitive abutment against a cylinder and against sliding contact with the valve guide.

The surface layer of the tapered seat portion of the hollow poppet valve charged with a coolant as defined in claim 1 or 2 may be hardened to Vickers hardness of about 380 HV or more as defined in claim 3.

### Working

By hardening the surface layer of the seat portion to about 380 HV or more, the surface layer can secure a wear resistance necessary to maintain intimate contact thereof with the seat metal of the cylinder.

In accordance with another aspect of the invention, there is provided a method of manufacturing a hollow poppet valve charged with a coolant as defined in claim 4, the method including steps of:
cold pressing a material into a cup-shaped object (hereinafter referred to as cup-shaped object) having a thick edge at the open end of the cup-shaped object;
intermediate annealing to soften the cup-shaped object;
cold drawing to form a head portion having an flared opening at the open end of the cup-shaped object,a cylindrical hollow shaft portion integral with the head portion,and
a tapered seat portion around the outer periphery of the thick edge of the open end,
the method including at least one intermediate annealing step prior to the steps of cold drawing and arbitrary number of annealing steps during the steps of cold drawing as needed, whereby the head portion is hardened to Vickers hardness in the range from about 250 to 350 HV inclusive.

### Working

As a consequence of the intermediate annealing performed prior to, and during, the steps of cold drawing, it is possible to manufacture a hollow poppet valve charged with a coolant as defined in claim 1 that retains necessary fatigue strength as well as creep strength as it is used repeatedly at high temperatures.

The shaft portion of the hollow poppet valve as defined in claim 4 may be hardened to Vickers hardness of 350 HV or more in the steps of cold drawing, as defined in claim 5.

### Working

Through the steps of cold drawing, the shaft portion of the hollow poppet valve as defined in claim 2 can be fabricated to retain necessary fatigue strength against repeated abutment against a cylinder, and wear resistance against sliding contact with the valve guide of the cylinder.

In the method of manufacturing the hollow poppet valve as defined in claim 4 or 5, the surface layer of the seat portion of the hollow poppet valve may be hardened to Vickers hardness of about 380 HV or more in the steps of cold forming subsequent to the cold drawing, as defined in claim 6.

### Working

Through the steps of cold forging, it is possible to fabricate the seat portion of the hollow poppet valve having wear resistance necessary to retain intimate contact of the seat portion with the seat metal of the cylinder.

### RESULTS OF THE INVENTION

Through the steps of cold drawing and intermediate annealing, the hollow poppet valve charged with a coolant in accord with claim 1 of the invention can retain sufficient fatigue strength and creep strength if the head portion is used repeatedly at high temperatures. Since there is no fear that the hollow poppet valve is fractured if used under such conditions, the valve is suited for use in an internal combustion engine that is internally heated to a high temperature. The hollow poppet valve in accord with claim 2 has an enhanced strength against the repetitive stresses acted on the shaft portion by a cylinder and enhanced strength against the friction with the valve guide of the cylinder, the shaft portion can retain required fatigue strength and wear resistance.

The poppet valve in accord with claim 3 has a seat portion that has sufficient anti-wear strength that it can retain intimate contact with the seat metal of the cylinder during its repetitive abutment with the cylinder

A method in accord with claim 4 enables manufacture of a hollow poppet valve charged with a coolant suitable for use in an internal combustion engine that is internally heated to a high temperature.

This method also enables manufacture of a hollow poppet valve having a strong shaft portion that can resist against repetitive tensile stresses and frictions.

The method in accord with claim 5 enables manufacture of a hollow poppet valve having a strong shaft that can withstand repetitive contact forces applied thereto by a cylinder and frictional forces applied thereto by the valve guide of the cylinder.

The method in accord with claim 6 further enables manufacture of a valve having a seat portion that can maintain intimate contact with the seat metal of the cylinder during its repetitive abutment with the cylinder.

### BEST MODE FOR CARRYING OUT THE INVENTION ,

Fig. 1 is a front elevational view, shown partially cut away, of a hollow poppet valve charged with a coolant in accordance with one embodiment of the invention.
Fig. 2 is an enlarged sectional view of the cap welding portion of the valve.
Fig. 3 illustrates a process of manufacturing the hollow poppet valve.
Fig. 4 illustrates steps of cold drawing involved in a process of manufacturing the hollow poppet valve.
Fig. 5 is a graph showing hardness versus fatigue strength of a head portion used at a high temperature, as estimated from fatigue tests of a cold-rolled material.
Fig. 6 is a graph showing fatigue strength versus hardness of shaft portions used at different temperatures.

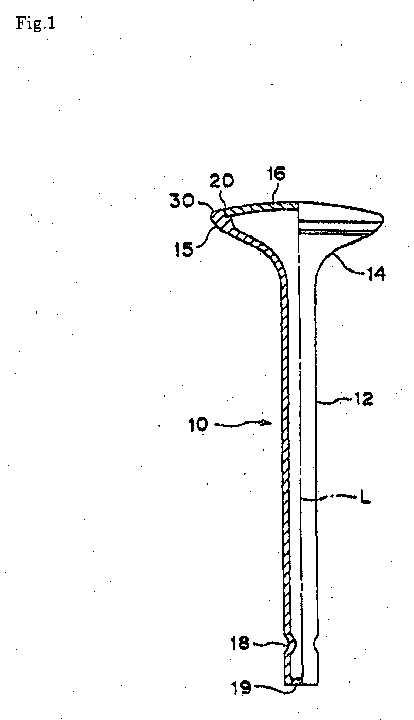

Fig 1 is a graph showing measured hardnesses of different regions of a shaft portion, head portion, and seat portion of a sampled trial valve.
Fig. 8 is an enlarged cross sectional view of a cap welding portion of a conventional valve.
Fig. 9 shows results of fatigue tests on cold worked valve materials.
Fig. 10 shows results of creep tests on cold worked valve materials.

The invention will now be described by way of example with reference to Fig. 1 through 10.

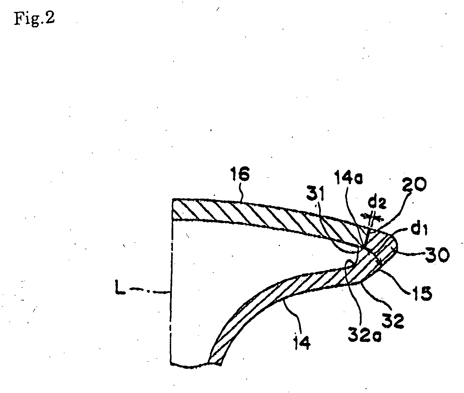

Fig. 1 shows a front view, partly cut away, of a hollow poppet valve 10, and Fig. 2 shows an enlarged cross section of the cap welding portion of the valve., The poppet valve 10 has a hollow cylindrical shaft portion 12 having a closed lower end, and a head portion 14 integrally formed on top of the shaft portion 12 and having a flared upper open end. The shaft portion 12 is formed to have a substantially uniform thickness, but the head portion 14 is formed of a wall that gradually increases in thickness towards the upper open end thereof (Fig. 1).

The open end has a thick edge 30 having a seat portion on the periphery thereof such that heat applied to the cap welding portion to weld a cap will not influence on the seat portion 15.

A disk-shaped cap 10 is integrally welded to the open edge of the head portion 14. Reference numeral 18 indicates a cotter groove formed on the outer periphery of the lower end of the shaft portion 12. Reference numeral 19 refers to a tip portion formed at the lower end of the shaft portion 12.

An austenitic stainless steel of SUS304 or SUS305, for example, may be used as a valve material.

The coolant can be a liquid metal such as potassium sodium for example. The tip portion 19 is cut away from the valve to charge a coolant. After the poppet valve is charged with the coolant, another tip piece 19 is welded to close the valve. The coolant not only facilitates conduction of heat from the head portion 14 to the tip portion 19, but also helps reduce the weight of the valve.

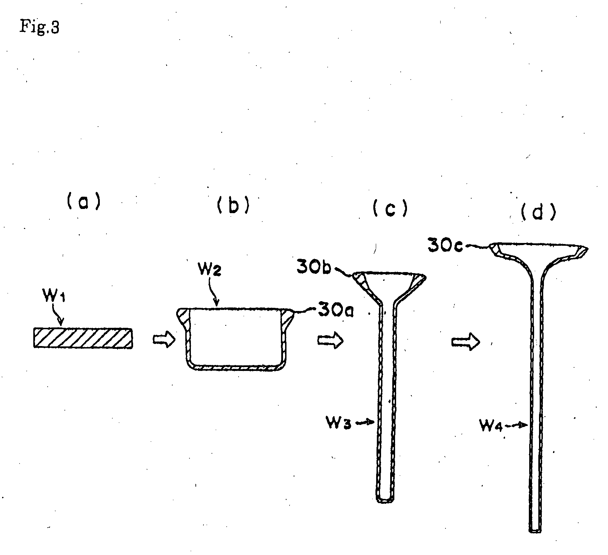

Referring to Fig. 3, a process of manufacturing a hollow poppet valve 10 in accordance with the embodiment of the invention will now be described.

First, a piece of blank material W1 is cold worked or cold pressed into a cup-shaped object W2, as shown in Fig. 3(a-b) . In addition to forming the cup-shaped object W2, this cold pressing process includes a step of forming a flanged thick edge 30a on the open end of the cup-shaped object W2.

In order to ease later pressing of the material by means of transfer presses and to harden each part of a valve to proper hardness, intermediate annealing is applied. The intermediate annealing is performed at least once subsequent to the cold pressing and prior to the cold drawing. If the material is still too hard to press, additional annealing may be applied between the cold pressing and the cold drawing as described below.

Subsequently, the cup-shaped object W2 is worked by cold drawing using transfer presses, as shown in Fig. 3(c-d).

In the process of cold drawing, the cylindrical shaft portion 12, head portion 14 having a flared opening at the open end of the cup-shaped article, and tapered seat portion 15 on the outer periphery of the open end are formed. By further pressing the cup-shaped object to form a thick portion 30b or 30c and a recessed step portion 14a for supporting a cap 16, a predetermined hollow poppet valve having a flared open head portion 14 is obtained

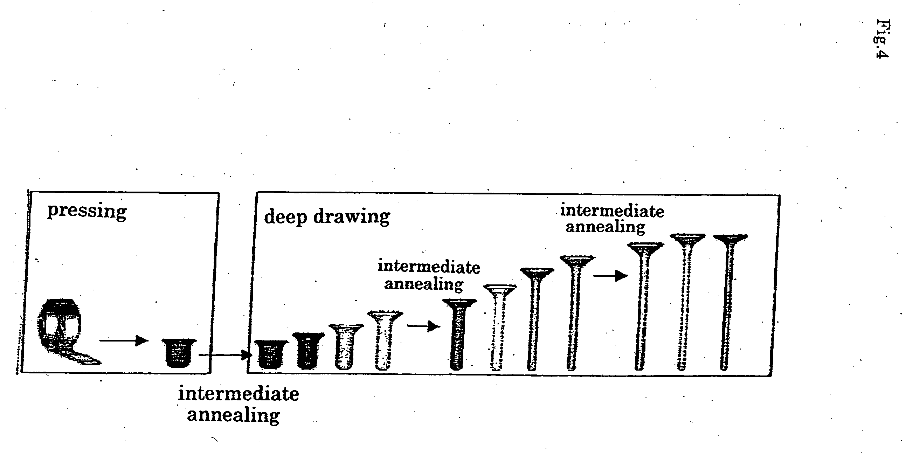

The process of cold drawing includes a multiplicity of steps in which the cold pressed cup-shaped object (shown at the far left of Fig. 4) is forced into a little narrower drawing die, and then the resultant narrowed object is further forced into a still narrower drawing die, and so on, until a desirably drew object results, as shown in Fig. 4. Since various parts of the valve are hardened every time the object is pressed into a drawing die and drawn, the object is annealed as needed during the drawing in order not to harden the resultant valve too hard.

Fig. 5 shows the fatigue strength (ordinate) of a material (which is SUS305 in the example shown herein) versus Vickers hardness (abscissa) at 600 °C, which is a temperature the valve is possibly heated to in use. The value of 300 MPa marked on the ordinate represents the fatigue strength required of the head portion 14.

As shown in Fig. 5, the fatigue strength of this material increases with hardness even after it exceeds required fatigue strength of 300 MPa at the hardness of about 240 HV, up until the hardness reaches about 316 HV. The fatigue strength then begins to decrease with hardness, and becomes less than the required fatigue strength of 300 MPa when the hardness exceeds about 360 HV. Therefore, taking account of variations of the valves manufactured, it is recommended to harden valves in the range between 250 HV and 350 HV inclusive in order to maintain the fatigue strength of the head portion of a valve not less than 300 MPa.

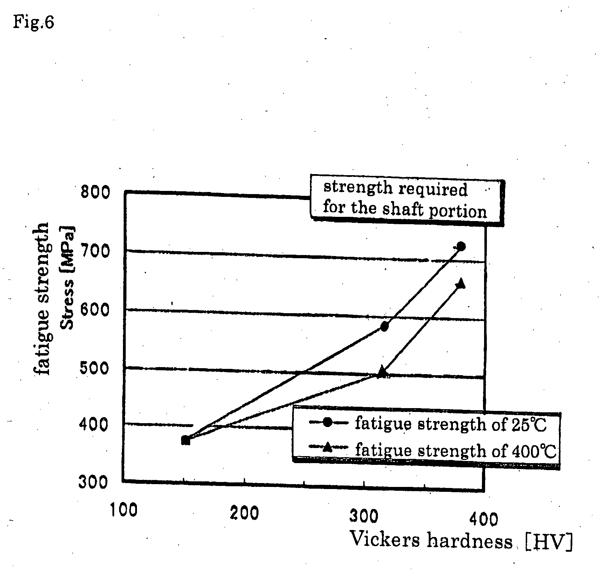

Fig. 6 also shows Vickers hardness (abscissa) versus fatigue strength (ordinate) of the same material (SUS305) as in Fig. 5 in the temperature range from 25 to 400 °C. This temperature range reflects the use conditions of the shaft portion 12 of the valve. Since fatigue strength decreases with temperature, it is an important issue whether deterioration in fatigue strength of the shaft portion takes place at 400 °C. Incidentally, the strength of 500 MPa is the fatigue strength required of the shaft portion 12.

It is seen in Fig. 6 that the fatigue strength of the material at and below 400 °C exceeds the required fatigue strength of 500 MPa when its hardness exceeds about 316 HV. It is shown in Fig. 9 that there is no significant loss in fatigue strength at 400 °C caused by hardening. It is considered that the fatigue strength increases with hardness in the domain where its hardness exceeds 316 HV. Therefore, taking account of product variations, it is recommended to harden the shaft portion 12 to about 350 HV or more in order to maintain its fatigue strength at or greater than 500 MPa.

Since it is necessary to allow intimate contact of the seat portion with the cylinder as much as possible, the hardness of the seat portion 15 is preferably hardened to about 380 HV or more in view of the wear resistance of the surface layer of the seat portion 15.

It should be noted that there is an allowable upper limit on the hardness of the head portion 14 to be drawn. Therefore, after the valve material is worked into a predetermined form, it is annealed in an intermediate annealing step to suppress the hardness of the material below 350 HV, thereby suppressing the hardness of the resultant head portion 14 below the maximum allowable hardness of about 350 HV.

The shaft portion 12 is repeatedly drawn so that the hardness thereof will be not be less than 350 HV after it is worked into a predetermined form.

On the other hand, following the cold drawing, the seat portion 15 is repeatedly cold forged to increase its hardness until the hardness exceeds 380 HV. Incidentally, in view of the fact that the manufacturing cost increases with the number of manufacturing steps involved, the head portion 14, shaft portion 12, and the seat portion 15 are preferably hardened to the respective minimum allowable hardness.

In cold drawing, a mandrel may be used as needed. The cotter groove 18 is fabricated in the lower end section of the shaft portion 12 by, for example, a roll forming process. Finally, a cap 16 which has been manufactured independently of the shaft portion 12 is electronbeam welded or laserbeam welded onto the recessed step 14a formed inside the head portion 14.

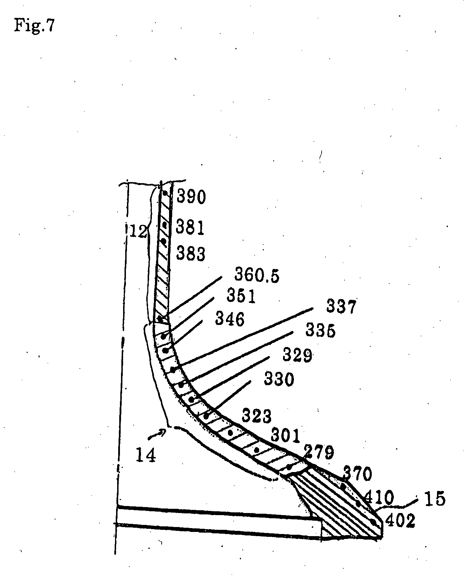

Fig. 7 shows measured Vickers hardness at various points in the shaft portion 12, head portion 14, and seat portion 15 of a trial valve. In this figure, the lower right portion of the valve (first region) extending from the point of 370 HV to the point of 402 HV as shown corresponds to the seat portion 15; a second region above the first region and extending from the point of 279 HV to the point of 351 HV corresponds to the head portion 14; and a third region above the second region and extending from the point of 360.5 HV to the point of 390 HV corresponds to the shaft portion 12. By allowing the hardness of the valve to be distributed as described above through the steps of cold drawing, intermediated annealing, and cold forging, each portion of the valve acquires appropriate fatigue strength, creep strength, and wear resistance in accord with the respective use requirement.

### BRIEF DESCRIPTION OF THE DRAWINGS

Fig. 1 is a front view of a hollow poppet valve charged with a coolant in accordance with one embodiment of the invention, shown with a portion cut away.
Fig. 2 is an enlarged cross section taken along a line through the cap welding portion of the valve.
Fig. 3 shows longitudinal cross sections of the hollow poppet valve at different stages of manufacture thereof.
Fig. 4 shows sequential steps of cold drawing involved in the manufacture of the hollow poppet valve.
Fig. 5 shows fatigue strength versus hardness of a cold-rolled valve material when used at a high temperature, as estimated from the results of tests conducted on the material.
Fig. 6 shows fatigue strength versus hardness of the shaft portion of the valve used at predetermined temperatures.
Fig. 7 shows measured hardness of the shaft portion, head portion, and seat portion of a sampled trial valve.
Fig. 8 is an expanded cross sectional view taken along a line through the cap welding portion of a conventional valve.
Fig. 9 shows the results of fatigue tests conducted on valve materials subjected to different cold works.
Fig. 10 shows the results of creep tests conducted on valve materials subjected to different cold works.

### DESCRIPTION OF THE SYMBOLS

- 10: hollow poppet valve
- 12: shaft portion (stem portion)
- 14: head portion (fillet portion)
- 15: seat portion
- 16: cap
- W2: cup-shaped object

## Claims

1. A hollow poppet valve (10) charged with a coolant and having portions of different hardness formed by steps of:
cold pressing a material (W1) into a cup-shaped object (W2) having a thick edge (30a, 30b, 30c, 30) at the open end of said cup-shaped object;
intermediate annealing to soften said cup-shaped object (W2);
cold drawing to form a head portion (14) having a flared opening at said open end of said cup-shaped object, a cylindrical hollow shaft portion (12) integral with said head portion, and
a tapered seat portion (15) around the outer periphery of said thick edge, whereby hardening said head portions (14) to Vickers hardness in the range from about 250 HV to 350 HV inclusive.

2. The hollow poppet valve charged with a coolant according to claim 1, wherein the Vickers hardness of said shaft portion (12) is not less than about 350 HV.

3. The hollow poppet valve charged with a coolant according to claim 1 or claim 2, wherein the Vickers hardness of the surface layer of said tapered seat portion (15) is not less than 380 HV.

4. A method of manufacturing a hollow poppet valve (10) charged with a coolant, said method comprising steps of:
cold pressing a material (W1) into a cup-shaped object (W2) having a thick edge (30a, 30b, 30c, 30) at the open end of said cup-shaped object;
intermediate annealing to soften said cup-shaped object (W2);
cold drawing to form a head portion (14) having an flared opening at said open end of said cup-shaped object (W2), a cylindrical hollow shaft portion (12) integral with said head portion, and
a tapered seat portion (15) around the outer periphery of the edge of said thick open end,
said method including at least one intermediate annealing step prior to said steps of cold drawing and arbitrary times of annealing steps during said cold drawing as needed, whereby said head portion (14) is hardened to Vickers hardness in the range from about 250 to 350 HV inclusive.

5. The method of manufacturing a hollow poppet valve according to claim 4, wherein said shaft portion (12) is hardened to Vickers hardness not less than 350 HV in said steps of cold drawing.

6. The method of manufacturing a hollow poppet valve according to claim 4 or claim 5, wherein said surface layer of said seat portion (15) is hardened to Vickers hardness not less than about 380 HV in said steps of cold forming.

## Patentansprüche

1. Hohles Tellerventil (10), welches mit einem Kühlmittel befüllt ist und Abschnitte unterschiedlicher Härte aufweist, ausgebildet durch die Schritte:
Kaltpressen eines Materials (W1) in einen becherförmigen Gegenstand (W2) mit einem dicken Rand (30a, 30b, 30c, 30) an dem offenen Ende des becherförmigen Gegenstands;
Zwischenglühen zum Weichmachen des becherförmigen Gegenstands (W2);
Kaltziehen zum Ausbilden eines Kopfabschnitts (14), der eine aufgeweitete Öffnung an dem offenen Ende des becherförmigen Gegenstands, einen zylindrischen hohlen Schaftabschnitt (12), welcher mit dem Kopfabschnitt integriert ist, und einen zulaufenden Sitzabschnitt (15) um den Außenumfang der dicken Ränder herum aufweist, wobei der Kopfabschnitt (14) auf eine Vickers-Härte in dem Bereich von etwa 250 HV bis einschließlich 350 HV gehärtet wird

2. Hohles Tellerventil, welches mit einem Kühlmittel befüllt ist, nach Anspruch 1, wobei die Vickers-Härte des Schaftabschnitts (12) nicht geringer als etwa 350 HV ist.

3. Hohles Tellerventil, welches mit einem Kühlmittel befüllt ist, nach Anspruch 1 oder 2, wobei die Vickers-Härte der Oberflächenschicht des zulaufenden Sitzabschnitts (15) nicht geringer als 380 HV ist.

4. Verfahren zur Herstellung eines hohlen Tellerventils (10), welches mit einem Kühlmittel befüllt ist, wobei das Verfahren die Schritte umfasst:
Kaltpressen eines Materials (W1) in einen becherförmigen Gegenstand (W2), der einen dicken Rand (30a, 30b, 30c, 30) an dem offenen Ende des becherförmigen Gegenstands aufweist;
Zwischenglühen zum Weichmachen des becherförmigen Gegenstands (W2);
Kaltziehen zum Ausbilden eines Kopfabschnitts (14) mit einer aufgeweiteten Öffnung an dem offenen Ende des becherförmigen Gegenstands (W2), einem zylindrischen hohlen Schaftabschnitt (12), der mit dem Kopfabschnitt integriert ist, und eines zulaufenden Sitzabschnitts (15) um den Außenumfang des Rands des dicken offenen Endes herum,
wobei das Verfahren zumindest einen Zwischenglühschritt vor den Schritten des Kaltziehens und beliebige Male von Glühschritten während des Kaltziehens wie benötigt enthält, wodurch der Kopfabschnitt (14) auf eine Vickers-Härte in dem Bereich von etwa 250 bis einschließlich 350 HV gehärtet wird

5. Verfahren zur Herstellung eines hohlen Tellerventils nach Anspruch 4, wobei der Schaftabschnitt (12) auf eine Vickers-Härte nicht geringer als 350 HV in den Schritten des Kaltziehens gehärtet wird.

6. Verfahren zur Herstellung eines hohlen Tellerventils nach Anspruch 4 oder 5, wobei die Oberflächenschicht des Sitzabschnitts (15) auf eine Vickers-Härte nicht geringer als etwa 380 HV in den Schritten des Kaltformens gehärtet wird

## Revendications

1. Soupape champignon creuse (10) chargée d'un liquide de refroidissement et possédant des parties de dureté différente formées par les étapes suivantes :
pressage à froid d'un matériau (W1) pour le transformer en un objet en forme de coupelle (W2) ayant un bord épais (30a, 30b, 30c, 30) au niveau de l'extrémité ouverte dudit objet en forme de coupelle ;
recuit intermédiaire pour ramollir ledit objet en forme de coupelle (W2) ;
étirage à froid pour constituer une partie formant tête (14) ayant une ouverture évasée au niveau de ladite extrémité ouverte dudit objet en forme de coupelle, une partie formant arbre creux cylindrique (12) étant solidaire de ladite partie de tête, et une partie formant siège conique (15) autour de la périphérie externe dudit bord épais,
en aboutissant ainsi au durcissement desdites parties formant tête (14) à une dureté Vickers dans la plage d'environ 250 HV à 350 HV incluses

2. Soupape champignon creuse chargée d'un liquide de refroidissement selon la revendication 1, dans laquelle la dureté Vickers de ladite partie formant arbre (12) n'est pas inférieure à environ 350 HV.

3. Soupape champignon creuse chargée d'un liquide de refroidissement selon la revendication 1 ou la revendication 2, dans laquelle la dureté Vickers de la couche de surface de ladite partie formant siège conique (15) n'est pas inférieure à 380 HV

4. Procédé de fabrication d'une soupape champignon creuse (10) chargée d'un liquide de refroidissement, ledit procédé comprenant les étapes suivantes :
pressage à froid d'un matériau (W1) pour le transformer en un objet en forme de coupelle (W2) ayant un bord épais (30a, 30b, 30c, 30) au niveau de l'extrémité ouverte dudit objet en forme de coupelle ;
recuit intermédiaire pour ramollir ledit objet en forme de coupelle (W2) ;
étirage à froid pour constituer une partie formant tête (14) ayant une ouverture évasée au niveau de ladite extrémité ouverte dudit objet en forme de coupelle (W2), une partie formant arbre creux cylindrique (12) étant solidaire de ladite partie formant tête, et une partie formant siège conique (15) autour de la périphérie externe du bord de ladite extrémité ouverte épaisse,
ledit procédé comprenant au moins une étape de recuit intermédiaire avant lesdites étapes d'étirage à froid et des durées arbitraires des étapes de recuit au cours dudit étirage à froid telles que nécessaires, moyennant quoi ladite partie formant tête (14) est durcie à une dureté Vickers dans la plage d'environ 250 HV à 350 HV incluses,

5. Procédé de fabrication d'une soupape champignon creuse selon la revendication 4, dans lequel ladite partie formant arbre (12) est durcie à une dureté Vickers qui n'est pas inférieure à 350 HV dans lesdites étapes d'étirage à froid

6. Procédé de fabrication d'une soupape champignon creuse selon la revendication 4 ou la revendication 5, dans lequel ladite couche de surface de ladite partie formant siège (15) est durcie à une dureté Vickers qui n'est pas inférieure à environ 380 HV dans lesdites étapes de formage à froid.
